# EUROPEAN PATENT SPECIFICATION

(11) **EP 4 356 239 B1**
(45) Date of publication and mention of the grant of the patent: **08.04.2026**
(21) Application number: 21735577.5
(22) Date of filing: 14.06.2021
(51) Int. Cl.: G06F 8/654

(54) **SYSTEM FOR UPDATING FIRMWARE OF A HOUSEHOLD APPLIANCE**
SYSTEM ZUR AKTUALISIERUNG DER FIRMWARE EINES HAUSHALTSGERÄTS
SYSTÈME DE MISE À JOUR DE MICROLOGICIEL D'UN APPAREIL ÉLECTROMÉNAGER

(43) Date of publication of application: 24.04.2024
(73) Proprietor: ELECTROLUX APPLIANCES AKTIEBOLAG, 105 45 Stockholm (SE)
(72) Inventor: FABRICI, Lucio, 33080 Porcia (IT); BIASUTTI, Daniele, 33080 Porcia (IT); TAIARIOL, Mauro, 33080 Porcia (IT); PLOS, Livio, 33080 Porcia (IT)
(74) Representative: Electrolux Group Patents
(86) International application number: PCT/EP2021/065989
(87) International publication number: WO 2022/262938

(56) References cited:
- US-A1- 2014 344 798

## Description

### Field of the invention

The solution according to embodiments of the present invention generally relates to the household appliance field. More specifically, the solution according to embodiments of the present invention relates to a firmware update system for a household appliance.

### Background of the invention

Modern household appliances are capable of performing a number of different tasks. For this reason, a household appliance is equipped with one or more Printed Circuit Board Assemblies (PCBA) each one comprising one or more processing units (*e.g.*, processors or controllers) adapted to control corresponding electric/electronic components (*e.g.*, electronic switches, TRIACs, power transistors, heating resistors, electronic displays) for performing specific functions during the operation of the household appliance.

Each processing unit of a PCBA is configured to control the corresponding electric/electronic components according to a corresponding instructions set (firmware) stored at the processing unit, *e.g.,* in a memory unit of the processing unit. Moreover, the memory units of the processing units may also store configuration data configured to modify a behavior of the stored instruction sets according to a specific model of the household appliance.

In order to upgrade the processing units, for example to add new configurations settings and/or new functionalities, the corresponding firmware and/or the configuration data stored in the memory units are subjected to *(e.g.,* periodical) updates, referred to as "firmware updates".

For the sake of coinciseness, hereinafter, the expressions "instruction set" and "firmware" are to be intended in a broad way, so as to include not only the instruction sets or firmware themselves, but also possible configuration data for the configuration of said instruction set or firmware.

By the same token, hereinafter, the expression "firmware update" is to be intended in a broad way, so as to include an update of the instruction sets or firmware stored in a memory unit of the processing unit and/or an update of the configuration data for said instruction sets or firmware.

In order to carry out a firmware update, new versions of the firmware and/or configuration data that are already installed at the processing units are provided to the household appliance in form of update data packages.

The update data packages may be provided by an external server, and delivered to the household appliance through a communication network, such as the Internet. For this purpose, the household appliance may be provided with a communication unit configured for allowing a data communication between the household appliance and said external server.

By making reference to the so-called Over-The-Air (OTA) firmware update modality, the household appliance receives the update data packages from said external server through a wireless communication link. For example, the communication unit of the household appliance may be configured to establish a wireless (*e.g.*, Wi-Fi) communication link with a router, through which a (*e.g.,* Internet) communication link can be established with the external server.

US 2014/344798 discloses a production system including a plurality of controllers that control a plurality of pieces of production equipment, respectively, and a controller management apparatus that manages the plurality of controllers, and relates to upgrade of a version of software for a controller.

### Summary of the Invention

The Applicant has found that the management of firmware updates in form of update data packages wirelessly received by an external server, and especially according to the OTA update modality, is a very critical task, that can be affected by several drawbacks.

Since household appliances generally comprise a plurality of processing units, each one having a respective firmware installed thereat that can be potentially updated, when a firmware update is wirelessly received in form of update data packages, critical problems may arise if a processing unit is receiving an update data package containing updates for the firmware of a different processing unit.

Furthermore, having to manage the firmware update of an household appliance comprising a plurality of processing units, serious issues may arise if, as a result of a firmware update following the reception of update data packages, the firmware versions of the various processing unit are not compatible to each other.

Moreover, known modalities for updating the firmware of household appliances may disadvantageously require a too invasive intervention by a user.

The Applicant has therefore faced the problem of avoiding, or at least mitigating the abovementioned drawbacks affecting the known firmware updates.

In particular, one or more aspects of the solution according to specific embodiments of the invention are set out in the independent claims, with advantageous features of the same solution that are indicated in the dependent claims (with any advantageous feature provided with reference to a specific aspect of the solution according to an embodiment of the invention that applies *mutatis mutandis* to any other aspect thereof).

An aspect of the solution according to one or more embodiments of the invention relates to a household appliance.

The household appliance comprises a plurality of processing units for controlling electrically and/or electronically controllable components of the household appliance, and a communication unit for allowing a data communication between the household appliance and an external server through a communication network.

The communication unit is configured to receive from the external server an update data distribution comprising firmware update data packages for updating corresponding processing units.

The update data distribution includes a software component configured to be installed at, and executed by, at least one of said processing units.

Said software component is configured to selectively enable, between the communication unit and each one of the plurality of processing units, a respective communication line.

The communication unit is configured to deliver a firmware update package to a selected processing unit through the respective communication line between the communication unit and the selected processing unit enabled by said software component during an update operating mode of the household appliance.

Thanks to the possibility of selective enabling a respective communication line between the communication unit and each one of the plurality of processing unit, it is possible to efficiently route the firmware update data packages included in the received update data distribution to the correct processing units, avoiding thus the possibility that a processing unit receives an incorrect update data package (*i.e.,* an update data package containing updates for the firmware of another processing unit).

According to an embodiment of the present invention, the plurality of processing units comprises a first processing unit connected to the communication unit through a first electrical connection, and a set of second processing units each one connected to the first processing unit through a corresponding further electrical connection.

According to an embodiment of the present invention, said selected processing unit comprises a second processing unit selected from said set of second processing units.

According to an embodiment of the present invention, said communication line enabled by said software component between the communication unit and the selected processing unit corresponds to a coupling of said first electrical connection with the further electrical connection corresponding to said selected processing unit.

Thanks to the peculiar arrangement of the plurality of processing units, the first processing unit operates as a "steering element" configured to efficiently allow selective data communication between selected second processing units and the communication unit through the enabled communication line.

According to an embodiment of the present invention, said software component is installed at the first processing unit during the update operating mode of the household appliance.

According to an embodiment of the present invention, each processing unit of said plurality of processing units stores a corresponding instructions set comprising a corresponding application portion and a corresponding bootloader portion.

According to an embodiment of the present invention, each processing unit of said plurality of processing units is configured to operate in a bootloader mode according to the corresponding bootloader portion if said bootloader mode is activated at a startup of the processing unit, and is configured to operate according to a standard mode according to the corresponding application portion if said bootloader mode is not activated at the startup of the processing unit.

According to an embodiment of the present invention, said software component is installed at the first processing unit when the bootloader mode thereof is activated.

In this way, the firmware updating operations can be carried out without requiring a too invasive manual intervention by a user.

According to an embodiment of the present invention, said software component is a plugin for the bootloader portion of the instructions set of the first processing unit.

According to an embodiment of the present invention, the bootloader mode of the plurality of processing units is activated during the update operating mode of the household appliance.

According to an embodiment of the present invention, the update data distribution further includes a further software component configured to enable a rewriting of instructions set stored at the selected processing unit using the firmware update package delivered to the selected processing unit by the communication unit.

According to an embodiment of the present invention, said further software component is a plugin for the bootloader portion of the instructions set of the selected processing unit.

According to an embodiment of the present invention, each firmware update package includes a latest version of the instructions set of a corresponding processing unit.

According to an embodiment of the present invention, the communication unit is configured for carrying out during said update operating mode the following operations for each second processing unit of the set of second processing units:
- comparing a version of the instructions set stored at said second processing unit with the latest version of said instructions set included in the firmware update package;
- selecting said second processing units for delivering thereto the firmware update package if the instructions set stored at said processing unit has a version different from said latest version.

In this way, only the instruction sets of the processing units having an outdated version are subjected to an update, reducing thus the time required for performing the update.

Furthermore, it is advantageously avoided that, as a result of a firmware update following the reception of update data packages, the firmware versions of the various processing unit are not compatible to each other.

According to an embodiment of the present invention, said software component is configured to enable said communication line with a point-to-point communication protocol.

According to an embodiment of the present invention, said household appliance is a selected one among:
- a laundry machine configured to wash and/or dry laundry;
- a dishwasher;
- a oven;
- a refrigerator;
- a cooking hob.

### Brief description of the annexed drawings

These and other features and advantages of the present invention will be made apparent by the following description of some exemplary and non limitative embodiments thereof; for its better intelligibility, the following description should be read making reference to the attached drawings, wherein:
**Figure 1** schematically illustrates a household appliance wherein concepts according to the embodiments of the present invention can be applied;
**Figure 2** illustrates an exemplary arrangement of firmware stored in the memory units of processing units of the household appliance of **Figure 1** according to an embodiment of the present invention;
**Figures 3A-3F** depict a flow chart describing the operations carried out by the household appliance for updating the firmware stored in the memory units of **Figure 2** according to an embodiment of the present invention.

### Detailed description of preferred embodiments of the invention

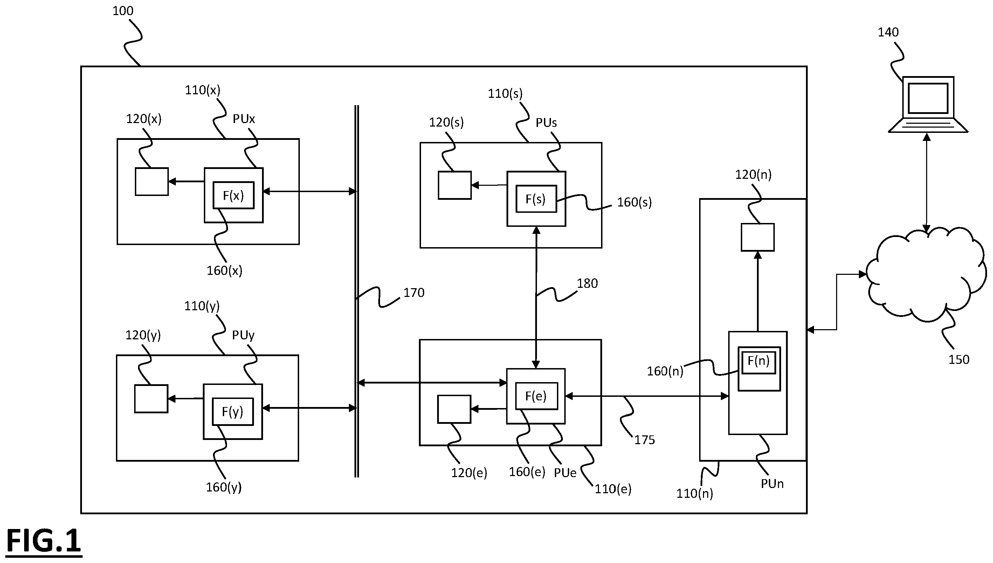

With reference to the drawings, **Figure 1** schematically illustrates in terms of functional blocks a household appliance **100** wherein concepts according to the embodiments of the present invention can be applied.

The household appliance **100** may be for example a laundry machine configured to wash and/or dry laundry, a dishwasher, an oven, a refrigerator, or a cooking hob. However, it is underlined that the concepts of the present invention can be also applied to other kinds of household appliances not included in the abovementioned exemplary list.

According to an embodiment of the present invention, the household appliance **100** comprises a plurality of PCBAs. Each PCBA of said plurality of PCBAs comprises one or more processing units (*e.g.*, processors or controllers) adapted to control corresponding electric/electronic components of the household appliance **100** for performing specific functions during the operation of the household appliance **100.**

In the exemplary case illustrated in **Figure 1**, the household appliance **100** comprises:
- a PCBA **110(x)** comprising a processing unit **PUx** configured to control a component **120(x)**;
- a PCBA **110(y)** comprising a processing unit **PUy** configured to control a component **120(y)**;
- a PCBA **110(e)** comprising a processing unit **PUe** configured to control a component **120(e)**;
- a PCBA **110(s)** comprising a processing unit **PUs** configured to control a component **120(s)**.

According to a first non-limitative example in which the household appliance **100** is a laundry machine configured to wash laundry, the component **120(x)** may be an electronic switch for the selective opening/closing of a hydraulic valve, the component **120(y)** may be a heating resistor for heating washing liquid, the component **120(e)** may be a user interface, and the component **120(s)** may be a graphic display unit.

According to a second non-limitative example in which the household appliance **100** is an oven, the component **120(x)** may be a heating resistor for heating a cooking cavity of the oven, the component **120(y)** may be a TRIAC for the control of an oven fan, the component **120(e)** may be a user interface, and the component **120(s)** may be a graphic display unit.

According to a third non-limitative example in which the household appliance **100** is a refrigerator, the component **120(x)** may be a TRIAC for the control of refrigerator liquid compressor, the component **120(y)** may be a TRIAC for the control of a refrigerator fan, the component **120(e)** may be a user interface, and the component **120(s)** may be a graphic display unit.

Generally, the concepts of the present invention can be applied to a wide range of different household appliances comprising a wide range of different electric/electronic components including for example electronic switches, TRIACs, power transistors, heating resistors, electronic displays.

According to an embodiment of the present invention, the household appliance **100** further comprises a communication unit **110(n)** configured to allow data communication between the household appliance **100** and an external server **140** trough a communication network **150**, such as the internet.

According to a first example, the communication unit **110(n)** is configured to establish a Wi-Fi communication link with a router (not illustrated in figure) configured in turn to establish communication with the communication network **150.**

According to a further example, the communication unit **110(n)** is configured to establish a wireless communication link with the communication network **150** by exploiting a mobile communication network (not illustrated in figure).

According to an embodiment of the invention, the communication unit **110(n)** comprises a processing unit **PUn** configured to control hardware components **120(n)** of the communication unit **110(n)**.

According to an embodiment of the present invention, each of the processing units **PUx**, **PUy**, **PUe**, **PUs** and **PUn** is configured to control the corresponding components **120(x)**, **120(y)**, **120(e)**, **120(s)** and **120(n)** during a first operating mode of the household appliance **100** according to (portions of) a corresponding instructions set (firmware) **F(x)**, **F(y)**, **F(e)**, **F(s)** and **F(n)** stored in a corresponding memory unit **160(x)**, **160(y)**, **160(e)**, **160(s)** and **160(n),** respectively, of said processing unit. It is pointed out that by "first operating mode" it is herein intended a "standard" operating mode of the household appliance **100**, during which the household appliance **100** is performing its normal functions. In line with what has been already stated in the introduction part of the present document, hereinafter, said firmware **F(x)**, **F(y)**, **F(e)**, **F(s)** and **F(n)** has to be intended to comprise also possible configuration data for the configuration of the firmware itself.

According to an embodiment of the present invention, the PCBAs **110(x)**, **110(y)**, **110(e)** are coupled to a same data bus **170** for allowing exchange of data among the processing units **PUx**, **PUy** and **PUe**.

According to an embodiment of the present invention, when the household appliance **100** is operating in the first operating mode, the data bus **170** is accessed by the processing units **PUx**, **PUy** and **PUe** according to a peer-to-peer communication protocol, such as for example the Major Appliance Communication System ("MACS") communication protocol employed in most of the household appliances sold by the Applicant of the present patent application.

According to an embodiment of the present invention, the PCBA **110(e)** and the communication unit **110(n)** are connected through a data bus **175** for allowing exchange of data between the processing units **PUe** and **PUn.**

According to an embodiment of the present invention, when the household appliance **100** is operating in the first operating mode, the data bus **175** is accessed by the processing units **PUe, PUn** according to a point-to-point communication protocol, such as for example the HACL communication protocol.

According to an embodiment of the present invention, the PCBAs **110(e)** and **110(s)** are connected through a data bus **180** for allowing exchange of data between the processing units **PUe**, **PUs.**

The arrangement of the PCBAs of the household appliance **100** is such that the only way to access the (external) communication network **150** (and therefore, the external server **140**) is through the communication unit **110(n).**

Moreover, it is pointed out that the arrangement of the PCBAs of the household appliance **100** according to the embodiments of the present invention is such that the processing units **PUx**, **PUy**, **PUe**, **PUs** comprise:
- a first processing unit - *i.e.,* the processing unit **PUe** - that is directly connected to the processing unit **PUn** of the communication unit **110(n)** through a respective first electrical connection - *i.e.,* the data bus **175** -, and
- a set of second processing units - *i.e.,* the processing units **PUs**, **PUx**, **PUy** - that are connected to said first processing unit - *i.e.,* to the processing unit **PUe** - through a respective further electrical connection - *i.e.,* the data bus **170** for the processing units **PUx**, **PUy,** and the data bus **180** for the processing unit **PUs.**

In this way, as will be described in greater detail in the following, according to the embodiments of the invention, while the communication unit **110(n)** operates as a "gate" for allowing selective data communication between the household appliance **100** and the external server **140,** the processing unit **PUe** operates as a "steering element" configured to allow selective data communication between the processing units **PUs**, **PUx**, **PUy** and the communication unit **110(n).**

It is pointed out that the concepts of the present invention can be generally applied to a household appliance **100** comprising a different number of PCBAs, which can be connected to each other with a different arrangement, as long as the communication with the (external) communication network **150** is through the communication unit **110(n)**, and the processing units of the PCBAs are arranged so as to comprise a first processing unit and a plurality of second processing units, with data communication between each second processing unit and the communication unit **110(n)** is enabled through said first processing unit.

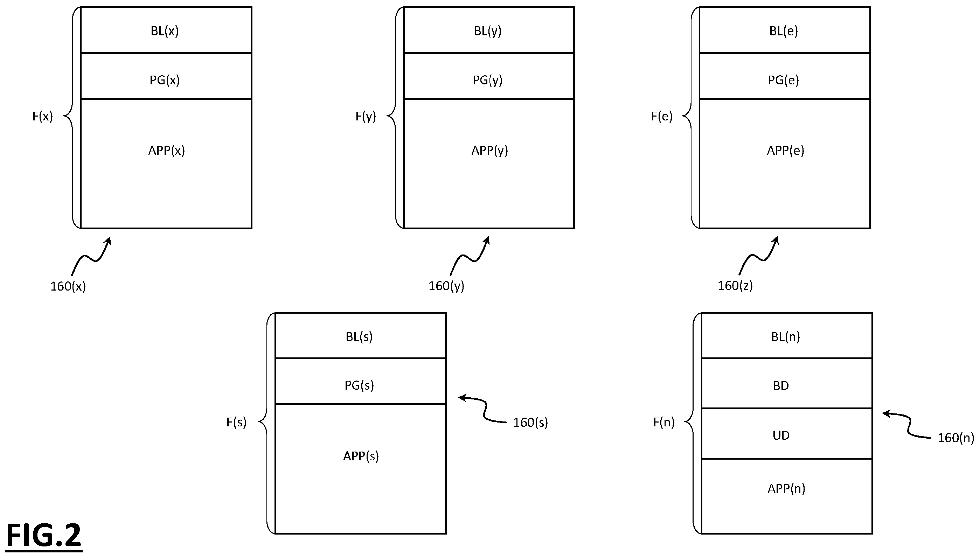

**Figure 2** illustrates in terms of simplified functional blocks an exemplary arrangement of the firmware **F(x)**, **F(y)**, **F(e)**, **F(s)**, **F(n)** stored in the memory units **160(x)**, **160(y)**, **160(e)**, **160(s)**, **160(n)** of the processing units **PUx**, **PUy**, **PUe**, **PUs**, **PUn** according to an embodiment of the present invention.

According to an embodiment of the present invention, each firmware **F(x)**, **F(y)**, **F(e)**, **F(s)**, **F(n)** comprises a corresponding bootloader firmware portion **BL(x)**, **BL(y)**, **BL(e)**, **BL(s)**, **BL(n)** (hereinafter, simply referred to as "bootloader") that is configured to run at the startup of the respective processing unit **PUx**, **PUy**, **PUe**, **PUs**, **PUn.**

According to an embodiment of the present invention, each firmware **F(x)**, **F(y)**, **F(e)**, **F(s)**, **F(n)** further comprises a corresponding application firmware portion **APP(x)**, **APP(y)**, **APP(e)**, **APP(s)**, **APP(n)** (hereinafter, simply referred to as "application") comprising an instructions set used by the respective processing unit **PUx, PUy, PUe, PUs, PUn** during the first operating mode of the household appliance **100** for controlling the corresponding component(s) **120(x)**, **120(y)**, **120(e)**, **120(s)** and **120(n)**. It is pointed out that the application firmware portion (or simply "application") **APP(x)**, **APP(y)**, **APP(e)**, **APP(s)**, **APP(n)** is herein meant to include, in addition to the instructions set used by the respective processing unit **PUx**, **PUy**, **PUe**, **PUs**, **PUn**, also possible configuration data for the configuration of said instruction set.

According to an embodiment of the present invention, the bootloader **BL(x)**, **BL(y)**, **BL(e)**, **BL(s)**, **BL(n)** is the first portion of the firmware **F(x)**, **F(y)**, **F(e)**, **F(s)**, **F(n)** that runs at the startup of the respective processing unit **PUx**, **PUy**, **PUe**, **PUs**, **PUn.** If the activation of the bootloader **BL(x)**, **BL(y)**, **BL(e)**, **BL(s)**, **BL(n)** is not forced before a time-out is elapsed, the processing unit **PUx, PUy, PUe, PUs, PUn** starts to run the application **APP(x)**, **APP(y)**, **APP(e)**, **APP(s)**, **APP(n)**. When instead the bootloader **BL(x)**, **BL(y)**, **BL(e)**, **BL(s)**, **BL(n)** is activated, software components (referred to as "plugins") extending the features of the bootloader **BL(x)**, **BL(y)**, **BL(e)**, **BL(s)**, **BL(n)** can be installed and activated for being executed.

Plugins for the bootloaders **BL(x)**, **BL(y)**, **BL(e)**, **BL(s)** have been identified in **Figure 2** with references **PG(x)**, **PG(y)**, **PG(e)**, **PG(s)**. Example of plugins comprise a so-called "flashloader" configured to open the possibility to erase stored data and/or write new received data, and a so-called "bridge" configured to create a bidirectional link between a serial line used by the bootloader and another serial line.

As will be described in greater detail in the following, according to the embodiments of the present invention, the processing unit **PUe** is configured to install and execute the "bridge" plugin to selectively enable a communication line or link between the communication unit **110(n)** and selected processing units among the processing units **PUs**, **PUx**, **PUy** for allowing a selective data communication between the processing unit **PUn** and said selected processing units.

As will be described in greater detail in the following, according to an embodiment of the present invention, during a second operating mode of the household appliance **100,** also referred to as "update mode", the firmware **F(x)**, **F(y)**, **F(e)**, **F(s)**, **F(n)** stored in the memory units **160(x)**, **160(y)**, **160(e)**, **160(s)**, **160(n)** of the processing units **PUx**, **PUy**, **PUe**, **PUs**, **PUn** may be updated with a new version thereof provided by the external server **140.**

On this regard, according to an embodiment of the present invention, the memory unit **160(n)** of the processing unit **PUn** is further configured to store a firmware update data distribution **UD** (hereinafter, simply referred to as "update distribution") received from the external server **140.** The update distribution **UD** is a distribution comprising, for each application **APP(x)**, **APP(y)**, **APP(e)**, **APP(s)**, **APP(n)** installed in the memory units **160(x)**, **160(y)**, **160(e)**, **160(s)**, **160(n)** of the processing units **PUx**, **PUy**, **PUe**, **PUs**, **PUn**, one or more corresponding firmware update data packages (hereinafter, simply referred to as "update packages *UP*") comprising a last (updated) version of said application **APP(x)**, **APP(y)**, **APP(e)**, **APP(s)**, **APP(n)** to be installed in place of the currently installed one.

According to an embodiment of the present invention, the plugins **PG(x)**, **PG(y)**, **PG(e)**, **PG(s)** for the bootloaders **BL(x)**, **BL(y)**, **BL(e)**, **BL(s)** are included in the (update packages *UP* of the) firmware update data distribution **UD** received from the external server **140.**

According to an embodiment of the present invention, the memory unit **160(n)** of the processing unit **PUn** is further configured to store a firmware backup data distribution **BD** (hereinafter, simply referred to as "backup distribution"). The backup distribution **BD** is a distribution comprising a copy of the current version of the applications **APP(x)**, **APP(y)**, **APP(e)**, **APP(s)**, **APP(n)**, that can be used to restore the correct operation of the household appliance **100** in case something went wrong in the update carried out during the second operating mode of the household appliance **100.**

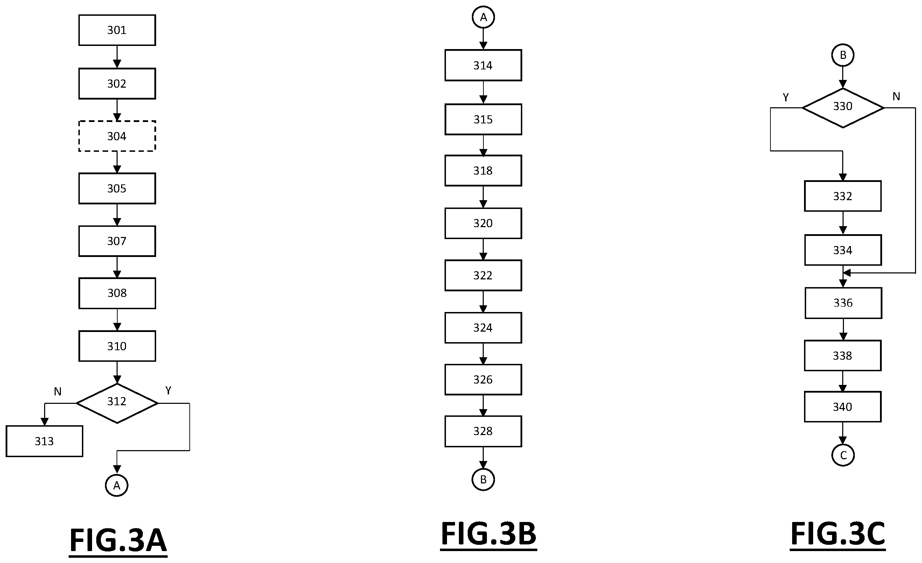

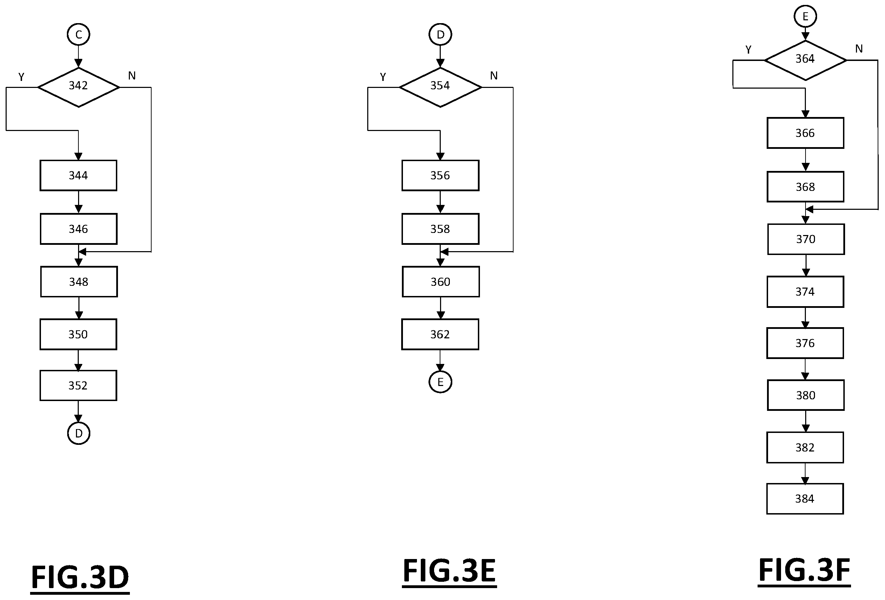

**Figures 3A-3F** depict a flow chart describing the operations carried out by the household appliance **100** for updating the firmware **F(x)**, **F(y)**, **F(e)**, **F(s)** stored in the memory units **160(x)**, **160(y)**, **160(e)**, **160(s)** of the processing units **PUx**, **PUy**, **PUe**, **PUs** according to an embodiment of the present invention.

At the beginning of the flow chart illustrated in **Figures 3A-3F**, the household appliance **100** is operating in the first operating mode, with the processing units **PUx**, **PUy**, **PUe**, **PUs**, **PUn** that are configured to control the corresponding component(s) **120(x)**, **120(y)**, **120(e)**, **120(s)**, **120(n)** according to the applications **APP(x)**, **APP(y)**, **APP(e)**, **APP(s)**, **APP(n)**. In other words, the operations described in the flow chart carried out when the household appliance **100** is in the first operating mode are carried out in background, without affecting the standard operation of the household appliance **100.**

According to an embodiment of the present invention, the processing unit **PUn** (*e.g.*, periodically) interrogates the external server **140** through the communication network **150** about the availability of a firmware update (block **301**).

When a new firmware update is available, the processing unit **PUn** downloads from the external server **140** an update distribution **UD** and stores it in the memory unit **160(n)** (block **302**).

According to an embodiment of the present invention, the update distribution **UD** received from the external server **140** is a complete update distribution, *i.e.,* it comprises update packages for all the applications **APP(x)**, **APP(y)**, **APP(e)**, **APP(s)** of the processing units **PUx**, **PUy**, **PUe**, **PUs**, even for those applications whose version is already the latest one. As will be described in detail the following, according to an embodiment of the present invention, even if the downloaded update distribution **UD** comprises update packages *UP* for all the applications **APP(x)**, **APP(y)**, **APP(e)**, **APP(s)**, the update procedure will involve the actual updating of only those applications **APP(x)**, **APP(y)**, **APP(e)**, **APP(s)** having a version different from (*e.g.,* older than) the one included in the respective update packages *UP* of the update distribution **UD.**

According to an embodiment of the present invention, if no backup distribution **BD** is already stored in the memory unit **160(n)** form a previous update, a new backup distribution **BD** is downloaded from the external server and stored in the memory unit **160(n)** (block **304**).

According to an embodiment of the present invention, the processing unit **PUn** asks a user of the household appliance **100** for the approval of carrying out an update using the downloaded update distribution **UD** (block **305**).

According to an embodiment of the present invention, once the approval is received, the processing unit **PUe** forces a reboot of the processing unit **PUn** (block **307**).

According to an embodiment of the present invention, the bootloader **BL(n)** is then activated, and the processing unit **PUn** disables communication between the household appliance **100** and the external communication network **150**, preventing thus data communication between the household appliance **100** and the external server **140** (block **308**), for example by deactivating the components **120(n)** *(e.g.,* a Wi-Fi module) of the communication unit **110(n)** responsible of establishing a communication link with the external communication network **150.**

In this way, undesired external events and/or unauthorized accesses to the household appliance **100** are advantageously prevented during the following update operations, increasing the reliability of the outcome of the update.

According to an embodiment of the present invention, the processing unit **PUn** carries out a package verifying phase on the update packages *UP* of the update distribution **UD** (block **310**).

According to an embodiment of the present invention, the package verifying phase provides for verifying the integrity of the received update distribution **UD**, in order to avoid that the update is carried out based on a corrupted or incomplete update distribution **UD**, caused for example by a possible incomplete reception of the update packages *UP* and/or by the corruption of the latter.

According to an embodiment of the present invention, the package verifying phase further provides for verifying the authenticity of the received update packages *UP.*

According to an embodiment of the invention, the update packages *UP* received by the processing unit **PUn** are protected by means of digital signature, for example through an asymmetric key.

According to an embodiment of the present invention, the package verifying phase provides that the processing unit **PUn** verifies the digital signature protecting the update packages *PU* exploiting a digital certificate. According to an advantageous embodiment of the present invention, the package verifying phase further provides that the processing unit **PUn** checks the validity of said digital certificate.

According to an embodiment of the present invention, the package verifying phase is also carried out for verifying authenticity and/or integrity of the backup distribution **BD.**

According to an embodiment of the present invention, if the outcome of the package verifying phase is negative (exit branch **N** of block **312**), for example because the update distribution **UD** has been assessed to be corrupted or incomplete, and/or because the assessment of the authenticity of the received update packages *UP* has given a negative outcome, the update procedure is aborted (block **31**3).

According to an embodiment of the present invention, if the outcome of the package verifying phase is positive (exit branch **Y** of block **312**), the household appliance **100** switches from the first operating mode to the second operating mode by having the processing unit **PUe** disable the applications **APP(x)**, **APP(y)**, **APP(e)**, **APP(s)** of the processing units **PUx**, **PUy**, **PUe**, **PUs** (block **314**).

In this way, the following update operations are carried out with the household appliance **100** that is in a configuration in which the processing units **PUx**, **PUy**, **PUe**, **PUs** are prevented from controlling the corresponding component(s) **120(x)**, **120(y)**, **120(e)**, **120(s)**. In other words, while the operations up to block **312** are carried out in background, with the household appliance **100** that is still able to actively control the various component(s) **120(x)**, **120(y)**, **120(e)**, **120(s)** thereof in a standard way, once the household appliance **100** is switched to the second operating mode, the normal operation of the household appliance **100** is prevented.

Moreover, as long as the household appliance **100** is in the second operating mode, the processing units **PUx**, **PUy**, **PUs** are prevented to interact with each other.

According to an embodiment of the present invention, once the applications **APP(x)**, **APP(y)**, **APP(e)**, **APP(s)** of the processing units **PUx**, **PUy**, **PUe**, **PUs** have been disabled, the processing unit **PUe** reboots itself, activating its bootloader **BL(e)**, and then, it forces another reboot of the processing unit **PUn**, activating again its bootloader **BL(n)** (block **315**).

Then, according to an embodiment of the present invention, the processing unit **PUn** sends a first plugin *PGB1(e)* - included in the downloaded update distribution **UD** - to the processing unit **PUe** through the data bus **175** (block **318**). According to an embodiment of the present invention, the sending of the first plugin *PGB1(e)* is carried out according to a point-to-point communication protocol, such as for example the Domestic Appliance Acquisition System ("DAAS") communication protocol. According to an embodiment of the present invention, the first plugin *PGB1(e)* is a plugin of the "bridge" type, configured to set up a bidirectional link between the processing unit **PUe** and the processing unit **PUs** over the data bus **180.** The first plugin *PGB1(e)* received by the bootloader **BL(e)** is then installed by the bootloader **BL(e)** of the processing unit **PUe** and then it is executed. In this way, a communication line is enabled between the processing unit **PUn** and the processing unit **PUs** (through the processing unit **PUe**). Particularly, according to an embodiment of the present invention, said enabled communication line between the processing unit **PUn** and the processing unit **PUs** comprises a coupling of the data bus **175** with the data bus **180.**

According to an embodiment of the present invention, the processing unit **PUn** forces a reboot of the processing unit **PUs** by sending to the processing unit **PUe** a reboot message (block **320**). Since the processing unit **PUe** has its bootloader **BL(e)** that is activated with the first plugin *PGB1(e),* the reboot message received by the processing unit **PUe** from the processing unit **PUn** is routed to the processing unit **PUs,** forcing the reboot of the latter, and the activation of its bootloader **BL(s).**

Then, according to an embodiment of the present invention, the processing unit **PUn** sends a second plugin *PGB2(e)* - included in the downloaded update distribution **UD -** to the processing unit **PUe** through the data bus **175** (block **322**). According to an embodiment of the present invention, the sending of the second plugin *PGB2(e)* is carried out according to a point-to-point communication protocol, such as for example the DAAS communication protocol. According to an embodiment of the present invention the second plugin *PGB2(e)* is a plugin of the "bridge" type, configured to set up a bidirectional link between the processing unit **PUe** and the data bus **170.** The Second plugin *PGB2(e)* received by the bootloader **BL(e)** is then installed by the bootloader **BL(e)** of the processing unit **PUe** and then it is executed. In this way, a communication line is enabled between the processing unit **PUn** and the processing units **PUx, PUy** (through the processing unit **PUe**). Particularly, according to an embodiment of the present invention, said enabled communication line between the processing unit **PUn** and the processing units **PUx, PUy** comprises a coupling of the data bus **175** with the data bus **170.** According to an embodiment of the present invention, said enabled communication line between the processing unit **PUn** and the processing units **PUx, PUy** is exploited to provide update packages *UP* of the update distribution **UD** to the processing units **PUx, PUy.**

According to an embodiment of the present invention, the processing unit **PUn** forces a reboot of the processing units **PUx** and **PUy** by sending to the processing unit **PUe** a reboot message (block **324**). Since the processing unit **PUe** has its bootloader **BL(e)** that is activated with the second plugin *PGB2(e),* the reboot message received by the processing unit **PUe** from the processing unit **PUn** is routed on the data bus **170,** and received by the processing units **PUx** and **Puy,** which are therefore forced to reboot themselves, causing in turn the activation of the bootloaders **BL(x), BL(y).**

At this point, according to an embodiment of the present invention, the processing unit **PUn** selects a first processing unit to be updated among the processing units **PUx**, **PUy** connected to the data bus, such as the processing unit **PUx** (block **326**). According to an embodiment of the present invention, this selection is carried out by sending a selection message *S(IDx)* containing an identifier *IDx* of the processing unit **PUx** to the processing unit **PUe.** Since the processing unit **PUe** has its bootloader **BL(e)** that is activated with the second plugin *PGB2(e),* the selection message *S(IDx)* is routed on the data bus **170** according to a point-to-point communication protocol, such as for example the DAAS communication protocol. The processing unit connected to the data bus **170** having an identifier matching the identifier included in the message *S(IDx)* - in this case, the processing unit **PUx** - replies back by sending an acknowledge message *ACK* to the processing unit **PUn**.

According to an embodiment of the present invention, the processing unit **PUn** sends to the selected processing unit **PUx** a request to obtain a version identifier *VI(x)* identifying the version of the firmware **F(x)** - and particularly of the application **APP(x)** - actually stored and installed in the memory unit **160(x),** and the processing unit **PUx** replies by providing the requested version identifier *VI(x)* to the processing unit **PUn** (block **328**).

Then, according to an embodiment of the present invention, the processing unit **PUn** extracts from the downloaded update distribution **UD** a version identifier *VD(x)* identifying the version of the update packages *UP* of the update distribution **UD** corresponding to the application **APP(x),** and compares the two version identifiers *VI(x), VD(x).*

If the version identifier *VI(x)* is different from the version identifier *VD(x)* (exit branch **Y** of block **330**), it means that the version of the firmware **F(x)** - and particularly of the application **APP(x)** - actually stored and installed in the memory unit **160(x)** is not the same as (*e.g.,* is older than) the version of the firmware received with the update distribution **UD.**

In this case, according to an embodiment of the present invention, the processing unit **PUn** sends a plugin *PGF(x)* of the "flashloader" type to the selected processing unit **PUx** (block **332**) according to a point-to-point communication protocol, such as for example the DAAS communication protocol. Particularly, according to an embodiment of the present invention, in order to send the plugin *PGF(x)* to the selected processing unit **PUx,** the plugin *PGF(x)* is firstly sent to the processing unit **PUe.** Since the processing unit **PUe** has its bootloader **BL(e)** that is activated with the second plugin *PGB2(e),* the plugin *PGF(x)* received by the processing unit **PUe** from the processing unit **PUn** is routed to the selected processing unit **PUx.** Then, the plugin *PGF(x)* is executed, so that the processing unit **PUx** is switched to a configuration in which it is ready to erase its firmware **F(x)** and overwrite it with an updated version thereof. According to an embodiment of the present invention, the processing unit **PUn** drives the processing unit **PUx** to rewrite its firmware **F(x)** - and particularly the application **APP(x)** - with an updated version thereof extracted from update packages *UP* of the downloaded update distribution **UD** sent to the processing unit **PUx** over the communication line (comprising a coupling of the data bus **175** with the data bus **170**) enabled by the second plugin *PGB2(e)* (block **334**). According to an embodiment of the present invention, this operation is carried out by having the processing unit **PUn** send to the processing unit **PUx** a rewrite command *WR(x)* together with the updated version of the firmware included in the update packages *UP* through the processing unit **PUe** over the communication line (comprising a coupling of the data bus **175** with the data bus **170**) enabled by the second plugin *PGB2(e)* and exploiting a point-to-point communication protocol, such as for example the DAAS communication protocol. Once the firmware **F(x)** - and particularly the application **APP(x)** - of the processing unit **PUx** is rewritten using the updated version thereof, the processing unit **PUn** disables the plugin *PGF(x).* Then, the processing unit **PUn** deselects the processing unit **PUx** (block **336**).

If the version identifier *VI(x)* is instead the same of the version identifier *VD(x)* (exit branch **N** of block **330**), it means that the version of the firmware **F(x)** - and particularly of the application **APP(x)** - actually stored and installed in the memory unit **160(x)** is the same of the version of the firmware received with the update distribution **UD**, and therefore the firmware **F(x)** of the processing unit **PUx** does not require to be updated.

In this case, according to an embodiment of the present invention, the processing unit **PUn** directly deselects the processing unit **PUx** (block **336**).

At this point, according to an embodiment of the present invention, the processing unit **PUn** selects the processing unit **PUy** (block **338**). According to an embodiment of the present invention, this selection is carried out by sending a selection message *S(IDy)* containing an identifier *IDy* of the processing unit **PUy** to the processing unit **PUe.** Since the processing unit **PUe** has its bootloader **BL(e)** that is activated with the second plugin *PGB2(e),* the selection message *S(IDy)* is routed on the data bus **170** according to a point-to-point communication protocol, such as for example the DAAS communication protocol. The processing unit connected to the data bus **170** having an identifier matching the identifier included in the message *S(IDy)* - in this case, the processing unit **PUy** - replies back by sending an acknowledge message *ACK* to the processing unit **PUn.**

According to an embodiment of the present invention, the processing unit **PUn** sends to the selected processing unit **PUy** a request to obtain a version identifier *VI(y)* identifying the version of the firmware **F(y)** - and particularly of the application **APP(y)** - actually stored and installed in the memory unit **160(y),** and the processing unit **PUy** replies by providing the requested version identifier *VI(y)* to the processing unit **PUn** (block **340**).

Then, according to an embodiment of the present invention, the processing unit **PUn** extracts from the downloaded update distribution **UD** a version identifier *VD(y)* identifying the version of the update packages *UP* of the update distribution **UD** corresponding to the application **APP(y)** and compares the two version identifiers *VI(y), VD(y).*

If the version identifier *VI(y)* is different from the version identifier *VD(y)* (exit branch **Y** of block **342**), it means that the version of the firmware **F(y)** - and particularly of the application **APP(y)** - actually stored and installed in the memory unit **160(y)** is different from *(e.g.,* older than) the version of the firmware received with the update distribution **UD.**

In this case, according to an embodiment of the present invention, the processing unit **PUn** sends a plugin *PGF(y)* of the "flashloader" type to the selected processing unit **PUy** (block **344**) according to a point-to-point communication protocol, such as for example the DAAS communication protocol. According to an embodiment of the present invention, in order to send the plugin *PGF(y)* to the selected processing unit **PUy,** the plugin *PGF(y)* is firstly sent to the processing unit **PUe.** Since the processing unit **PUe** has its bootloader **BL(e)** that is activated with the second plugin *PGB2(e),* the plugin *PGF(y)* received by the processing unit **PUe** from the processing unit **PUn** is routed to the selected processing unit **PUy.** Then, the plugin *PGF(y)* is executed, so that the processing unit **PUy** is switched to a configuration in which it is ready to erase its firmware **F(y)** and overwrite it with an updated version thereof. According to an embodiment of the present invention, the processing unit **PUn** drives the processing unit **PUy** to rewrite its firmware **F(y)** - and particularly the application **APP(y)** - with an updated version thereof extracted from update packages *UP* of the downloaded update distribution **UD** sent to the processing unit **PUy** over the communication line (comprising a coupling of the data bus **175** with the data bus **170**) enabled by the second plugin *PGB2(e)* (block **346**). According to an embodiment of the present invention, this operation is carried out by having the processing unit **PUn** send to the processing unit **PUy** a rewrite command WR(y) together with the updated version of the firmware included in the update packages *UP* through the processing unit **PUe** over the communication line (comprising a coupling of the data bus **175** with the data bus **170**) enabled by the second plugin *PGB2(e)* and exploiting a point-to-point communication protocol, such as for example the DAAS communication protocol. Once the firmware **F(y)** - and particularly the application **APP(y)** - of the processing unit **PUy** is rewritten using the updated version thereof, the processing unit **PUn** disables the plugin *PGF(y).* Then, the processing unit **PUn** deselects the processing unit **PU7** (block **348**).

If the version identifier *VI(y)* is instead the same of the version identifier *VD(y)* (exit branch **N** of block **342**), it means that the version of the firmware **F(y)** - and particularly of the application **APP(y)** - actually stored and installed in the memory unit **160(y)** is the same of the version of the firmware received with the update distribution **UD**, and therefore the firmware **F(y)** of the processing unit **PUy** does not require to be updated.

In this case, according to an embodiment of the present invention, the processing unit **PUn** directly deselects the processing unit **PUy** (block **348**).

Then, according to an embodiment of the present invention, the processing unit **PUn** drives the processing unit **PUe** so as to deactivate the second plugin *PGB2(e)* and execute the first plugin *PGB1(e)* (block **350**). In this way, a communication line between the processing unit **PUn** and the processing unit **PUs** is re-enabled trough the processing unit **PUe** by a coupling of the data bus **175** with the data bus **180.** According to an embodiment of the present invention, said enabled communication line between the processing unit **PUn** and the processing unit **PUs** is exploited to provide update packages *UP* of the update distribution **UD** to the processing unit **PUs.**

At this point, according to an embodiment of the present invention, the processing unit **PUn** sends to the processing unit **PUs** a request to obtain a version identifier *VI(s)* identifying the version of the firmware **F(s)** - and particularly of the application **APP(s)** - actually stored and installed in the memory unit **160(s),** and the processing unit **PUs** replies by providing the requested version identifier *VI(s)* to the processing unit **PUn** (block **352**). According to an embodiment of the present invention, the request directed to the processing unit **PUs** is sent by the processing unit **PUn** to the processing unit **PUe.** Since the processing unit **PUe** has its bootloader **BL(e)** that is activated with the first plugin *PGB1(e),* the request is routed on the data bus **180** according to a point-to-point communication protocol, such as for example the DAAS communication protocol.

Then, according to an embodiment of the present invention, the processing unit **PUn** extracts from the downloaded update distribution **UD** a version identifier *VD(s)* identifying the version of the update packages *UP* of the update distribution **UD** corresponding to the application **APP(s)** and compares the two version identifiers *VI(s), VD(s).*

If the version identifier *VI(s)* is different from the version identifier *VD(s)* (exit branch **Y** of block **354**), it means that the version of the firmware **F(s)** - and particularly of the application **APP(s)** - actually stored and installed in the memory unit **160(s)** is different from *(e.g.,* older than) the version of the firmware received with the update distribution **UD.**

In this case, according to an embodiment of the present invention, the processing unit **PUn** sends a plugin *PGF(s)* of the "flashloader" type to the processing unit **PUs** (block **356**) according to a point-to-point communication protocol, such as for example the DAAS communication protocol. According to an embodiment of the present invention, in order to send the plugin *PGF(s)* to the processing unit **PUs,** the plugin *PGF(s)* is firstly sent to the processing unit **PUe.** Since the processing unit **PUe** has its bootloader **BL(e)** that is activated with the first plugin *PGB1(e),* the plugin *PGF(s)* received by the processing unit **PUe** from the processing unit **PUn** is routed to the processing unit **PUe.** Then, the plugin *PGF(s)* is executed, so that the processing unit **PUs** is switched to a configuration in which it is ready to erase its firmware **F(s)** and overwrite it with an updated version thereof. According to an embodiment of the present invention, the processing unit **PUn** drives the processing unit **PUs** to rewrite its firmware **F(s)** - and particularly the application **APP(s)** - with an updated version thereof extracted from update packages *UP* of the downloaded update distribution **UD** sent to the processing unit **PUs** over the communication line (comprising a coupling of the data bus **175** with the data bus **180**) enabled by the first plugin *PGB1(e)* (block **358**). According to an embodiment of the present invention, this operation is carried out by having the processing unit **PUn** send to the processing unit **PUs** a rewrite command *WR(s)* together with the updated version of the firmware included in the update packages *UP* through the processing unit **PUe** over the communication line (comprising a coupling of the data bus **175** with the data bus **180**) enabled by the first plugin *PGB1(e)* and exploiting a point-to-point communication protocol, such as for example the DAAS communication protocol. Once the firmware **F(s)** - and particularly the application **APP(s)** - of the processing unit **PUs** is rewritten using the updated version thereof, the processing unit **PUn** disables the plugin *PGF(s),* and then disables the plugin *PGB1(e)* (block **360**).

If the version identifier *VI(s)* is instead the same of the version identifier *VD(s)* (exit branch **N** of block **354**), it means that the version of the firmware **F(s)** - and particularly of the application **APP(s)** - actually stored and installed in the memory unit **160(s)** is the same of the version of the firmware received with the update distribution **UD,** and therefore the firmware **F(s)** of the processing unit **PUs** does not require to be updated.

In this case, according to an embodiment of the present invention, the processing unit **PUn** directly disables the plugin *PGB1(e)* (block **360**).

The processing unit **PUe** is now in a configuration without plugins of the "bridge" type activated. Therefore, the messages sent by the processing unit **PUn** are now received by the processing unit **PUe** as a final recipient (the messages being no more further routed to other processing units).

According to an embodiment of the present invention, the processing unit **PUn** sends to the processing unit **PUe** a request to obtain a version identifier *VI(e)* identifying the version of the firmware **F(e)** - and particularly of the application **APP(e)** - actually stored and installed in the memory unit **160(e),** and the processing unit **PUe** replies by providing the requested version identifier *VI(e)* to the processing unit **PUn** (block **362**). According to an embodiment of the present invention, the request is sent according to a point-to-point communication protocol, such as for example the DAAS communication protocol.

Then, according to an embodiment of the present invention, the processing unit **PUn** extracts from the downloaded update distribution **UD** a version identifier *VD(e)* identifying the version of the update packages *UP* of the update distribution **UD** corresponding to the application **APP(e)** and compares the two version identifiers *VI(e, VD(e).*

If the version identifier *VI(e)* is different from the version identifier *VD(e)* (exit branch **Y** of block **364**), it means that the version of the firmware **F(e)** - and particularly of the application **APP(e)** - actually stored and installed in the memory unit **160(e)** is different from *(e.g.,* older than) the version of the firmware received with the update distribution **UD.**

In this case, according to an embodiment of the present invention, the processing unit **PUn** sends a plugin *PGF(e)* of the "flashloader" type to the processing unit **PUe** (block **366**) according to a point-to-point communication protocol, such as for example the DAAS communication protocol. Then, the plugin *PGF(e)* is activated, so that the processing unit **PUn** is switched to a configuration in which it is ready to erase its firmware **F(e)** and overwrite it with an updated version thereof. According to an embodiment of the present invention, the processing unit **PUn** drives the processing unit **PUe** to rewrite its firmware **F(e)** - and particularly the application **APP(e)** - with an updated version thereof extracted from update packages *UP* of the downloaded update distribution **UD** (block **368**). According to an embodiment of the present invention, this operation is carried out by having the processing unit **PUn** sends to the processing unit **PUe** a rewrite command *WR(e)* together with the updated version of the firmware extracted from the update packages *UP* exploiting a point-to-point communication protocol, such as for example the DAAS communication protocol. Once the firmware **F(e)** - and particularly the application **APP(e)** - of the processing unit **PUe** is rewritten using the updated version thereof, the processing unit **PUn** disables the plugin *PGF(e)* (block **370**).

If the version identifier *VI(e)* is instead the same of the version identifier *VD(e)* (exit branch **N** of block **364**), it means that the version of the firmware **F(e)** - and particularly of the application **APP(e)** - actually stored and installed in the memory unit **160(e)** is the same of the version of the firmware received with the update distribution **UD**, and therefore the firmware **F(e)** of the processing unit **PUe** does not require to be updated.

In this case, according to an embodiment of the present invention, the processing unit **PUn** directly disables the plugin *PGF(e)* (block **370**).

At this point, the processing units **PUx**, **PUy**, **PUe**, **PUs** have installed the last (newest) available version of the firmware **F(x)**, **F(y)**, **F(e)**, **F(s)**.

Therefore, according to an embodiment of the present invention, the household appliance **100** can be switched back to the first operating mode so that the processing units are enabled to control the corresponding component(s) **120(x)**, **120(y)**, **120(e)**, **120(s)** exploiting the last available version of the firmware **F(x)**, **F(y)**, **F(e)**, **F(s)**.

For this purpose, according to an embodiment of the present invention, the processing unit **PUn** forces again the reboot of the processing units **PUx, PUy, PUs** while the processing unit **PUe** reboot itself (block **374**). These reboots are performed without causing the activation of the corresponding bootloaders **BL(x)**, **BL(y)**, **BL(e)**, **BL(s)**, and are followed by an enabling of the corresponding applications **APP(x)**, **APP(y)**, **APP(e)**, **APP(s)** (block **376**).

Then, according to an embodiment of the present invention, the processing unit **PUn** is rebooted without causing the activation of the corresponding bootloader **BL(n)**, and the processing unit **PUn** enables again communication between the household appliance **100** and the external communication network **150,** allowing thus data communication between the household appliance **100** and the external server **140** (block **382**), for example by activating again the components **120(n)** *(e.g.,* a Wi-Fi module) of the communication unit **110(n)** responsible of establishing a communication link with the external communication network **150.**

At this point, according to an embodiment of the present invention, the processing unit **PUn** is configured to store in the memory unit **160(n)** a new backup distribution **BD** in the place of the already stored one (block **384**).

It is pointed out that the operations carried out by the household appliance **100** for updating the firmware **F(x)**, **F(y)**, **F(e)**, **F(s)** according to the embodiments of the invention described above provide that the household appliance **110** receives a complete update distribution **UD** comprising update packages *UP* for all the firmware **F(x)**, **F(y)**, **F(e)**, **F(s)** of the processing units **PUx**, **PUy**, **PUe**, **PUs**, but the actual update through rewriting of the firmware is carried out (possibly, only) for a set (*e.g.,* a subset) of the processing units, *i.e.,* only for selected processing units having a firmware version different from (*e.g.,* older than) the one contained in the update packages *UP* of the received update distribution **UD.**

Moreover, since the update distribution **UD** received from the external server **140** comprises the update packages *UP* for all the firmware **F(x)**, **F(y)**, **F(e)**, **F(s)** of the processing units **PUx**, **PUy**, **PUe**, **PUs**, said update distribution **UD** may also be exploited as a new backup distribution **BD.** This is particularly advantageous, since it does not require further operations because the update distribution **UD** is already stored in the memory unit **160(n)** of the processing unit **PUn.**

It is pointed out that while in the embodiments of the invention described above the update involved only the firmware **F(x)**, **F(y)**, **F(e)**, **F(s)** of the processing units **PUx**, **PUy**, **PUe**, **PUs**, the concepts of the present invention can be directly applied also to cases in which the update concerns also the firmware **F(n)** of the processing unit **P(n).**

In the embodiments of the invention described above, the update is mainly managed by the processing unit **PUn** of the communication unit **110(n),** since most of the main update operations are carried out by the processing unit **PUn.** However, similar considerations applies in case at least some of the update operations are carried out by a different processing unit, such as for example the processing unit **PUe.** For example, the selection of the processing units to be subjected to an update (*i.e.,* the operations comprising the comparison between the version of the installed firmware and the version of the firmware included in the updated packages of the received update distribution **UD**) may be carried out by a processing unit different from the processing unit **PUn,** such as for example the processing unit **PUe.**

Naturally, in order to satisfy local and specific requirements, a person skilled in the art may apply to the solution described above many logical and/or physical modifications and alterations. More specifically, although the present invention has been described with a certain degree of particularity with reference to preferred embodiments thereof, it should be understood that various omissions, substitutions and changes in the form and details as well as other embodiments are possible. In particular, different embodiments of the invention may even be practiced without the specific details set forth in the preceding description for providing a more thorough understanding thereof; on the contrary, well-known features may have been omitted or simplified in order not to encumber the description with unnecessary details. Moreover, it is expressly intended that specific elements and/or method steps described in connection with any disclosed embodiment of the invention may be incorporated in other embodiments.

## Claims

1. Household appliance **(100)** comprising a plurality of processing units (**PUx, PUy**, **PUe**, **PUs**) for controlling electrically and/or electronically controllable components (**120(x)**, **120(y)**, **120(e)**, **120(s)**) of the household appliance (**100**), and a communication unit (**PUn**) for allowing a data communication between the household appliance (**100**) and an external server (**140**) through a communication network (**150**), wherein:
- the communication unit (**PUn**) is configured to receive from the external server (**140**) an update data distribution (**UD**) comprising firmware update data packages for updating corresponding processing units; and
**characterized in that**:
- the update data distribution includes a software component (*PGB1(e); PGB2(e))* configured to be installed at, and executed by, at least one of said processing units, said software component being configured to selectively enable, between the communication unit (**PUn**) and each one of the plurality of processing units, a respective communication line;
- the communication unit is configured to deliver a firmware update package to a selected processing unit (**PUx**, **PUy**, **PUs**) through the respective communication line between the communication unit (**PUn**) and the selected processing unit enabled by said software component during an update operating mode of the household appliance.

2. The household appliance **(100)** of claim 1, wherein:
- the plurality of processing units (**PUx**, **PUy**, **PUe**, **PUs**) comprises a first processing unit (**PUe**) connected to the communication unit (**PUn**) through a first electrical connection (**175**), and a set of second processing units (**PUx**, **PUy**, **PUs**) each one connected to the first processing unit (**PUe**) through a corresponding further electrical connection (**170**, **180**);
- said selected processing unit (**PUx**, **PUy**, **PUs**) comprises a second processing unit selected from said set of second processing units (**PUx**, **PUy**, **PUs**);
- said communication line enabled by said software component (*PGBI(e); PGB2(e))* between the communication unit (**PUn**) and the selected processing unit **(PUx, PUy, PUs)** corresponds to a coupling of said first electrical connection with the further electrical connection **(170, 180)** corresponding to said selected processing unit.

3. The household appliance **(100)** of claim 2, wherein said software component (*PGB1(e); PGB2(e)*) is installed at the first processing unit **(PUe)** during the update operating mode of the household appliance.

4. The household appliance **(100)** of claim 2 or 3, wherein each processing unit of said plurality of processing units **(PUx, PUy, PUe, PUs)** stores a corresponding instructions set (**F(x)**, **F(y)**, **F(e)**, **F(s)**) comprising a corresponding application portion (**APP(x), APP(y), APP(e), APP(s)**) and a corresponding bootloader portion **(BL(x), BL(y)**, **BL(e)**, **BL(s)**), each processing unit of said plurality of processing units (**PUx**, **PUy**, **PUe**, **PUs**) being configured to operate in a bootloader mode according to the corresponding bootloader portion (**BL(x)**, **BL(y)**, **BL(e)**, **BL(s)**) if said bootloader mode is activated at a startup of the processing unit, and is configured to operate according to a standard mode according to the corresponding application portion (**APP(x)**, **APP(y)**, **APP(e)**, **APP(s)**) if said bootloader mode is not activated at the startup of the processing unit, wherein:
- said software component (*PGB1(e); PGB2(e)*) is installed at the first processing unit (**PUe**) when the bootloader mode thereof is activated.

5. The household appliance (**100**) of claim 4, wherein said software component (*PGB1(e); PGB2(e)*) is a plugin for the bootloader portion (**BL(e)**) of the instructions set of the first processing unit (**PUe**).

6. The household appliance (**100**) of claim 4 or 5, wherein the bootloader mode of the plurality of processing units (**PUx**, **PUy**, **PUe**, **PUs**) is activated during the update operating mode of the household appliance.

7. The household appliance (**100**) of any of the preceding claims, wherein the update data distribution further includes a further software component (*PGF(x); PGF(y); PGF(e); PFG(s)*) configured to enable a rewriting of instructions set (**F(x), F(y), F(e), F(s)**) stored at the selected processing unit (**PUx**, **PUy**, **PUe, PUs)** using the firmware update package delivered to the selected processing unit (**PUx**, **PUy**, **PUe, PUs**) by the communication unit (**PUn**)**.**

8. The household appliance (**100**) of claim 7 when depending to claim 4, wherein said further software component (*PGF(x); PGF(y); PFG(s)*) is a plugin for the bootloader portion **(BL(x), BL(x), BL(s))** of the instructions set of the selected processing unit (**PUx**, **PUy**, **PUs**).

9. The household appliance (100) of any of claims 4 to 8, wherein each firmware update package includes a latest version of the instructions set (**F(x), F(y), F(e), F(s)**) of a corresponding processing unit, the communication unit (**PUn**) being configured for carrying out during said update operating mode the following operations for each second processing unit of the set of second processing units **(PUx, PUy**, **PUs**):
- comparing a version of the instructions set (**F(x), F(y), F(s)**) stored at said second processing unit with the latest version of said instructions set included in the firmware update package;
- selecting said second processing units (**PUx**, **PUy**, **PUs**) for delivering thereto the firmware update package if the instructions set (**F(x), F(y), F(s)**) stored at said processing unit has a version different from said latest version.

10. The household appliance (**100**) of any of the preceding claims, wherein said software component *(PGB1(e); PGB2(e))* is configured to enable said communication line with a point-to-point communication protocol.

11. The household appliance (**100**) of any of the preceding claims, wherein said household appliance is a selected one among:
- a laundry machine configured to wash and/or dry laundry;
- a dishwasher;
- a oven;
- a refrigerator;
- a cooking hob.

## Patentansprüche

1. Haushaltgerät (100), welches mehrere Verarbeitungseinheiten (PUx, PUy, PUe, PUs) zum Steuern elektrisch und/oder elektronisch steuerbarer Komponenten (120(x), 120(y), 120(e), 120(s)) des Haushaltgeräts (100) und eine Kommunikationseinheit (PUn) zum Ermöglichen einer Datenkommunikation zwischen dem Haushaltgerät (100) und einem externen Server (140) über ein Kommunikationsnetz (150) umfasst, wobei:
- die Kommunikationseinheit (PUn) dafür ausgelegt ist, von dem externen Server (140) eine Aktualisierungsdatenverteilung (UD) zu empfangen, die Firmwareaktualisierungs-Datenpakete zum Aktualisieren entsprechender Verarbeitungseinheiten umfasst; und **dadurch gekennzeichnet, dass**:
- die Aktualisierungsdatenverteilung eine Softwarekomponente (PGB1(e); PGB2(e)) umfasst, die dafür ausgelegt ist, auf wenigstens einer der Verarbeitungseinheiten installiert und durch diese ausgeführt zu werden, wobei die Softwarekomponente dafür ausgelegt ist, selektiv zwischen der Kommunikationseinheit (PUn) und jeder der mehreren Verarbeitungseinheiten eine jeweilige Kommunikationsleitung freizuschalten;
- die Kommunikationseinheit dafür ausgelegt ist, ein Firmwareaktualisierungspaket an eine ausgewählte Verarbeitungseinheit (PUx, PUy, PUs) über die jeweilige Kommunikationsleitung zwischen der Kommunikationseinheit (PUn) und der ausgewählten Verarbeitungseinheit, die durch die Softwarekomponente während eines Aktualisierungs-Betriebsmodus des Haushaltgeräts freigeschaltet wurde, zu liefern.

2. Haushaltgerät (100) nach Anspruch 1, wobei:
- die mehreren Verarbeitungseinheiten (PUx, PUy, PUe, PUs) eine erste Verarbeitungseinheit (PUe), die mit der Kommunikationseinheit (PUn) über eine erste elektrische Verbindung (175) verbunden ist, und eine Menge von zweiten Verarbeitungseinheiten (PUx, PUy, PUs), von denen jede mit der ersten Verarbeitungseinheit (PUe) über eine entsprechende weitere elektrische Verbindung (170, 180) verbunden ist, umfassen;
- die ausgewählte Verarbeitungseinheit (PUx, PUy, PUs) eine zweite Verarbeitungseinheit umfasst, die aus der Menge von zweiten Verarbeitungseinheiten (PUx, PUy, PUs) ausgewählt ist;
- die Kommunikationsleitung, die durch die Softwarekomponente (PGB1(e); PGB2(e)) zwischen der Kommunikationseinheit (PUn) und der ausgewählten Verarbeitungseinheit (PUx, PUy, PUs) freigeschaltet wird, einer Kopplung der ersten elektrischen Verbindung mit der der ausgewählten Verarbeitungseinheit entsprechenden weiteren elektrischen Verbindung (170, 180) entspricht.

3. Haushaltgerät (100) nach Anspruch 2, wobei die Softwarekomponente (PGB1(e); PGB2(e)) auf der ersten Verarbeitungseinheit (PUe) während des Aktualisierungs-Betriebsmodus des Haushaltgeräts installiert wird.

4. Haushaltgerät (100) nach Anspruch 2 oder 3, wobei jede Verarbeitungseinheit der mehreren Verarbeitungseinheiten (PUx, PUy, PUe, PUs) einen entsprechenden Anweisungssatz (F(x), F(y), F(e), F(s)) speichert, der einen entsprechenden Anwendungsteil (APP(x), APP(y), APP(e), APP(s)) und einen entsprechenden Bootloader-Teil (BL(x), BL(y), BL(e), BL(s)) umfasst, wobei jede Verarbeitungseinheit der mehreren Verarbeitungseinheiten (PUx, PUy, PUe, PUs) dafür ausgelegt ist, in einem Bootloader-Modus gemäß dem entsprechenden Bootloader-Teil (BL(x), BL(y), BL(e), BL(s)) zu arbeiten, falls der Bootloader-Modus bei einem Starten der Verarbeitungseinheit aktiviert ist, und dafür ausgelegt ist, gemäß einem Standardmodus gemäß dem entsprechenden Anwendungsteil (APP(x), APP(y), APP(e), APP(s)) zu arbeiten, falls der Bootloader-Modus beim Starten der Verarbeitungseinheit nicht aktiviert ist, wobei:
- die Softwarekomponente (PGB1(e); PGB2(e)) auf der ersten Verarbeitungseinheit (PUe) installiert wird, wenn der Bootloader-Modus derselben aktiviert ist.

5. Haushaltgerät (100) nach Anspruch 4, wobei die Softwarekomponente (PGB1(e); PGB2(e)) ein Plugin für den Bootloader-Teil (BL(e)) des Anweisungssatzes der ersten Verarbeitungseinheit (PUe) ist.

6. Haushaltgerät (100) nach Anspruch 4 oder 5, wobei der Bootloader-Modus der mehreren Verarbeitungseinheiten (PUx, PUy, PUe, PUs) während des Aktualisierungs-Betriebsmodus des Haushaltgeräts aktiviert ist.

7. Haushaltgerät (100) nach einem der vorhergehenden Ansprüche, wobei die Aktualisierungsdatenverteilung ferner eine weitere Softwarekomponente (PGF(x); PGF(y); PGF(e); PFG(s)) beinhaltet, die dafür ausgelegt ist, ein Überschreiben des Anweisungssatzes (F(x), F(y), F(e), F(s)), der auf der ausgewählten Verarbeitungseinheit (PUx, PUy, PUe, PUs) gespeichert ist, unter Verwendung des Firmwareaktualisierungspakets, das durch die Kommunikationseinheit (PUn) an die ausgewählte Verarbeitungseinheit (PUx, PUy, PUe, PUs) geliefert wird, zu ermöglichen.

8. Haushaltgerät (100) nach Anspruch 7, wenn abhängig von Anspruch 4, wobei die weitere Softwarekomponente (PGF(x); PGF(y); PFG(s)) ein Plugin für den Bootloader-Teil (BL(x), BL(x), BL(s)) des Anweisungssatzes der ausgewählten Verarbeitungseinheit (PUx, PUy, PUs) ist.

9. Haushaltgerät (100) nach einem der Ansprüche 4 bis 8, wobei jedes Firmwareaktualisierungspaket eine neueste Version des Anweisungssatzes (F(x), F(y), F(e), F(s)) einer entsprechenden Verarbeitungseinheit enthält, wobei die Kommunikationseinheit (PUn) dafür ausgelegt ist, während des Aktualisierungs-Betriebsmodus die folgenden Arbeitsschritte für jede zweite Verarbeitungseinheit der Menge von zweiten Verarbeitungseinheiten (PUx, PUy, PUs) auszuführen:
- Vergleichen einer Version des Anweisungssatzes (F(x), F(y), F(s)), der auf der zweiten Verarbeitungseinheit gespeichert ist, mit der neuesten Version des Anweisungssatzes, die in dem Firmwareaktualisierungspaket enthalten ist;
- Auswählen der zweiten Verarbeitungseinheiten (PUx, PUy, PUs) für das Liefern des Firmwareaktualisierungspakets an sie, falls der Anweisungssatz (F(x), F(y), F(s)), der auf der betreffenden Verarbeitungseinheit gespeichert ist, eine Version aufweist, die von der neuesten Version verschieden ist.

10. Haushaltgerät (100) nach einem der vorhergehenden Ansprüche, wobei die Softwarekomponente (PGB1(e); PGB2(e)) dafür ausgelegt ist, die Kommunikationsleitung mit einem Punkt-zu-Punkt-Kommunikationsprotokoll freizuschalten.

11. Haushaltgerät (100) nach einem der vorhergehenden Ansprüche, wobei das Haushaltgerät ein ausgewähltes von folgenden Geräten ist:
- eine Waschmaschine, die dafür ausgelegt ist, Wäsche zu waschen und/oder zu trocknen;
- eine Geschirrspülmaschine;
- ein Ofen;
- ein Kühlschrank;
- ein Kochfeld.

## Revendications

1. Appareil ménager (100) comprenant une pluralité d'unités de traitement (PUx, PUy, PUe, PUs) destinées à commander des composants commandables électriquement et/ou électroniquement (120(x), 120(y), 120(e), 120(s)) de l'appareil ménager (100), et une unité de communication (PUn) destinée à permettre une communication de données entre l'appareil ménager (100) et un serveur externe (140) par le biais d'un réseau de communication (150), dans lequel :
- l'unité de communication (PUn) est configurée pour recevoir, en provenance du serveur externe (140), une distribution de données de mise à jour (UD) comprenant des paquets de données de mise à jour de micrologiciel pour mettre à jour des unités de traitement correspondantes ; et
**caractérisé en ce que** :
- la distribution de données de mise à jour inclut un composant logiciel (PGB1(e) ; PGB2(e)) configuré pour être installé sur, et exécuté par, au moins une desdites unités de traitement, ledit composant logiciel étant configuré pour activer sélectivement, entre l'unité de communication (PUn) et chacune de la pluralité d'unités de traitement, une ligne de communication respective ;
- l'unité de communication est configurée pour livrer un paquet de mise à jour de micrologiciel à une unité de traitement sélectionnée (PUx, PUy, PUs) par le biais de la ligne de communication respective entre l'unité de communication (PUn) et l'unité de traitement sélectionnée activée par ledit composant logiciel durant un mode de fonctionnement de mise à jour de l'appareil ménager.

2. Appareil ménager (100) de la revendication 1, dans lequel :
- la pluralité d'unités de traitement (PUx, PUy, PUe, PUs) comprend une première unité de traitement (PUe) connectée à l'unité de communication (PUn) par le biais d'une première connexion électrique (175), et un ensemble de secondes unités de traitement (PUx, PUy, PUs), chacune connectée à la première unité de traitement (PUe) par le biais d'une connexion électrique supplémentaire correspondante (170, 180) ;
- ladite unité de traitement sélectionnée (PUx, PUy, PUs) comprend une seconde unité de traitement sélectionnée parmi ledit ensemble de secondes unités de traitement (PUx, PUy, PUs) ;
- ladite ligne de communication activée par ledit composant logiciel (PGB1(e) ; PGB2(e)) entre l'unité de communication (PUn) et l'unité de traitement sélectionnée (PUx, PUy, PUs) correspond à un couplage de ladite première connexion électrique à la connexion électrique supplémentaire (170, 180) correspondant à ladite unité de traitement sélectionnée.

3. Appareil ménager (100) de la revendication 2, dans lequel ledit composant logiciel (PGB1(e) ; PGB2(e)) est installé sur la première unité de traitement (PUe) durant le mode de fonctionnement de mise à jour de l'appareil ménager.

4. Appareil ménager (100) de la revendication 2 ou 3, dans lequel chaque unité de traitement de ladite pluralité d'unités de traitement (PUx, PUy, PUe, PUs) stocke un ensemble d'instructions correspondant (F(x), F(y), F(e), F(s)) comprenant une partie d'application correspondante (APP(x), APP(y), APP(e), APP(s)) et une partie d'amorçage correspondante (BL(x), BL(y), BL(e), BL(s)), chaque unité de traitement de ladite pluralité d'unités de traitement (PUx, PUy, PUe, PUs) étant configurée pour fonctionner dans un mode d'amorçage selon la partie d'amorçage correspondante (BL(x), BL(y), BL(e), BL(s)) si ledit mode d'amorçage est activé à un démarrage de l'unité de traitement, et est configurée pour fonctionner selon un mode standard selon la partie d'application correspondante (APP(x), APP(y), APP(e), APP(s)) si ledit mode d'amorçage n'est pas activé au démarrage de l'unité de traitement, dans lequel :
- ledit composant logiciel (PGB1(e) ; PGB2(e)) est installé sur la première unité de traitement (PUe) lorsque le mode d'amorçage de celle-ci est activé.

5. Appareil ménager (100) de la revendication 4, dans lequel ledit composant logiciel (PGB1(e) ; PGB2(e)) est un module d'extension pour la partie d'amorçage (BL(e)) de l'ensemble d'instructions de la première unité de traitement (PUe).

6. Appareil ménager (100) de la revendication 4 ou 5, dans lequel le mode d'amorçage de la pluralité d'unités de traitement (PUx, PUy, PUe, PUs) est activé durant le mode de fonctionnement de mise à jour de l'appareil ménager.

7. Appareil ménager (100) de quelconques des revendications précédentes, dans lequel la distribution de données de mise à jour inclut en outre un composant logiciel supplémentaire (PGF(x); PGF(y) ; PGF(e) ; PFG(s)) configuré pour activer une réécriture de l'ensemble d'instructions (F(x), F(y), F(e), F(s)) stocké sur l'unité de traitement sélectionnée (PUx, PUy, PUe, PUs) en utilisant le paquet de mise à jour de micrologiciel livré à l'unité de traitement sélectionnée (PUx, PUy, PUe, PUs) par l'unité de communication (PUn).

8. Appareil ménager (100) de la revendication 7 lorsqu'elle dépend de la revendication 4, dans lequel ledit composant logiciel supplémentaire (PGF(x) ; PGF(y) ; PFG(s)) est un module d'extension pour la partie d'amorçage (BL(x), BL(x), BL(s)) de l'ensemble d'instructions de l'unité de traitement sélectionnée (PUx, PUy, PUs).

9. Appareil ménager (100) de quelconques des revendications 4 à 8, dans lequel chaque paquet de mise à jour de micrologiciel inclut une toute dernière version de l'ensemble d'instructions (F(x), F(y), F(e), F(s)) d'une unité de traitement correspondante, l'unité de communication (PUn) étant configurée pour effectuer, durant ledit mode de fonctionnement de mise à jour, les opérations suivantes pour chaque seconde unité de traitement de l'ensemble de secondes unités de traitement (PUx, PUy, PUs) :
- la comparaison d'une version de l'ensemble d'instructions (F(x), F(y), F(s)) stocké sur ladite seconde unité de traitement à la toute dernière version dudit ensemble d'instructions inclus dans le paquet de mise à jour de micrologiciel ;
- la sélection desdites secondes unités de traitement (PUx, PUy, PUs) pour livrer à celles-ci le paquet de mise à jour de micrologiciel si l'ensemble d'instructions (F(x), F(y), F(s)) stocké sur ladite unité de traitement a une version différente de ladite toute dernière version.

10. Appareil ménager (100) de quelconques des revendications précédentes, dans lequel ledit composant logiciel (PGB1(e) ; PGB2(e)) est configuré pour activer ladite ligne de communication avec un protocole de communication point-à-point.

11. Appareil ménager (100) de quelconques des revendications précédentes, dans lequel ledit appareil ménager est un appareil sélectionné parmi :
- une machine à linge configurée pour laver et/ou sécher du linge ;
- un lave-vaisselle ;
- un four ;
- un réfrigérateur ;
- une cuisinière.
